**Europäisches Patentamt**

**European Patent Office**

**Office européen des brevets**

(19)

(11) Veröffentlichungsnummer: **0 001 805**
**B1**

(12)

# EUROPÄISCHE PATENTSCHRIFT

(21) Anmeldenummer: **78101225.7**

(22) Anmeldetag: **25.10.78**

(51) Int. Cl³: **F 16 D 65/32**

(54) Federspeicherbremszylinder mit mechanischer Löseeinrichtung

(30) Priorität: **28.10.77 DE 2748540**

(43) Veröffentlichungstag der Anmeldung:
**16.05.79 Patentblatt 79/10**

(45) Bekanntmachung des Hinweises auf die Patenterteilung:
**28.05.80 Patentblatt 80/11**

(84) Benannte Vertragsstaaten:
**CH FR GB SE**

(56) Entgegenhaltungen:
**DE - A - 2 310 304**
**DE - A - 2 363 268**
**DE - A - 2 450 652**
**DE - A - 2 608 502**
**DE - U - 7 507 192**

(73) Patentinhaber: **Knorr-Bremse GmbH**
**Moosacher Strasse 80**
**D - 8000 München 40 (DE)**

(72) Erfinder: **Staltmeir, Josef**
**Dantestrasse 18**
**D - 8000 München 19 (DE)**
**Wosegien, Bernd**
**Ringseisstrasse 8**
**D - 8000 München 2 (DE)**
**Nadas, Julius**
**Kleiststrasse 10**
**D - 8057 Eching (DE)**

Courier Press, Leamington Spa, England.

## Federspeicherbremszylinder mit mechanischer Löseeinrichtung

Die Erfindung bezieht sich auf einen Federspeicherbremszylinder mit mechanischer Löseeinrichtung, insbesondere für Schienenfahrzeuge, mit einer mittel- oder unmittelbar einerseits axial unverschieblich im Zylindergehäuse und andererseits an einem Speicherfeder-Spannkolben abgestützten Speicherfeder, wobei die Löseeinrichtung einen zwischen dem Speicherfeder-Spannkolben und einem auf die Bremse wirkenden Kraftabgabeglied angeordneten, von der Speicherfeder (12) belastbaren, nichtselbsthemmenden Gewindespindel-Trieb umfaßt, dessen eines Teil undrehbar aber axial verschieblich und dessen anderes Teil drehbar, aber im wesentlichen mit dem Speicherfeder-Spannkolben verschieblich gehalten und mittels einer willkürlich schaltbaren Schaltkupplung feststellbar ist.

Bei einem derartigen, in der DE—OS 26 08 502 beschriebenen Federspeicherbremszylinder ist die Speicherfeder unmittelbar einerseits gegen ein Gehäuseteil und andererseits gegen den Spannkolben abgestützt. Das drehbar gelagerte Teil des Gewindespindel-Triebes ist mittels einer Drehkupplung axial verschieblich, aber undrehbar mit einem Kupplungsteil gekoppelt, welches unverschieblich, jedoch drehbar im Gehäuse gelagert ist. Weiterhin ist im Gehäuse eine willkürlich betätigbare Schaltkupplung vorgesehen, welche im unbetätigten Zustand das Kupplungsteil drehfest. d.h. festgebremst hält, eine Rotation desselben also nur in ihrem betätigten Zustand zuläßt. Wird bei diesem bekannten Federspeicherbremszylinder im eingebremsten Zustand die Schaltkupplung betätigt, so kann sich die Speicherfeder entspannen, wobei das drehbar gelagerte Teil des Gewindespindel-Triebes mitsamt dem Kupplungsteil in Rotation versetzt wird. Die hierbei in Drehung versetzten Teile weisen ein relativ geringes Schwungmoment auf, so daß sie sehr rasch auf hohe Drehzahlen beschleunigt werden können, die Speicherfeder sich also entsprechend rasch entspannt und daher mitsamt dem Spannkolben mit hoher Geschwindigkeit auf einen Endanschlag im Gehäuse auftritt. Dieses Aufschlagen kann Schäden verursachen. Außerdem wird beim bekannten Federspeicherbremszylinder bei diesem Aufschlagen die Drehung der mit hoher Drehzahl rotierenden Teile über die nichtselbsthemmende Verschraubung schlagartig gestoppt, wodurch eine hohe, örtliche Belastung der Gewindegänge gegeben ist.

Als weiterer Nachteil des bekannten Federspeicherbremszylinders ist anzusehen, daß di zwischen dem drehbar gelagerten Teil des Gewindespindel-Triebes und dem Kupplungsteil vorgesehene, Axialverschiebungen zulassende Drehkupplung vom durch die Speicherfeder in der nichtselbsthemmenden Verschraubung bewirkten Drehmoment belastet ist und somit durch ihre Reibung eine starke Streuung der vom Federspeicherbremszylinder ausübbaren Bremskraft bewirkt.

Aufgabe der Erfindung ist es, einen Federspeicherbremszylinder der eingangs genannten Art derart auszugestalten, daß bei einem Betätigen der Schaltkupplung zwecks Einleitens eines Notlösevorganges der Spannkolben mitsamt der Speicherfeder nur mit mäßiger Geschwindigkeit auf einen Endanschlag auftritt, also keine harten Schlagbeanspruchungen verursacht werden. Weiterhin soll die vom Federspeicherbremszylinder abgebbare Kraft nicht durch unnötige Reibung vermindert und in der Größe gestreut werden.

Diese Aufgabe wird bei einem Federspeicherbremszylinder der eingangs genannten Gattung nach der Erfindung dadurch gelöst, daß

a) die Speicherfeder auf dem Zylindergehäuse drehbar abgestützt ist;

b) das spannkolbenseitige Ende der Speicherfeder drehmomentschlüssig mit dem drehbar gelagerten Teil des Gewindespindel-Triebes verbunden bzw. durch eine zumindest nach Lösen der Schaltkupplung während der Bewegungsphase des Spannkolbens geschlossene Kupplung kuppelbar ist;

c) die Schaltkupplung zur Feststellung des drehbar gelagerten Teiles des Gewindespindel-Triebes an der Speicherfeder oder an einem mit dieser drehfest verbundenen Teil angreift.

Durch die Erfindung wird erreicht, daß bei einem Betätigen der Schaltkupplung die relativ schwere und einen großen Durchmesser aufweisende Speicherfeder vom rotierenden Teil des nichtselbsthemmenden Gewindespindel-Triebes mitgenommen werden muß, infolge des großen Schwungmoments also nur eine langsame Beschleunigung der Rotation erfolgt, die Speicherfeder sich dementsprechend langsam entspannt und der Spannkolben mit nur geringer Geschwindigkeit auf den Endanschlag auftritt. Alle Teile des Federspeicherbremszylinders werden somit vor harten Schlagbeanspruchungen bewahrt, zumal die Speicherfeder infolge ihrer Elastizität und relativen Weichheit im entspannten Zustand die Rotation der drehenden Teile weich abzufangen vermag.

Es ist möglich, die Schaltkupplung zwischen dem Spannkolben und der andererseits drehbar gegen das Gehäuseteil abgestützten Speicherfeder anzuordnen; zweckmäßiger ist es jedoch, wenn gemäß einem weiteren Merkmal der Erfindung die Schaltkupplung zwischen dem axial unverschieblichen Ende der Speicherfeder und dem Zylindergehäuse eingeordnet ist: Die Schaltkupplung muß dann nicht axialverschieblich, sondern kann axialunverschieblich im Zylindergehäuse angeordnet werden. Auch kann sich eine entsprechende, vorteilhafte Anordnung dadurch ergeben, daß das gehäuseseitige Speicherfederende auf einem Federteller aufliegt, der am Gehäuseteil drehbar axial abgestützt ist, und daß die Schaltkupplung zwischen dem Federteller und dem Gehäuseteil angeordnet ist.

Nach einem weiteren Merkmal der Erfindung ist es dabei zweckmäßig, wenn die Schaltkupplung eine nur in einer Übergangsphase vom geöffneten zum geschlossenen Kupplungszustand wirksame, in Drehrichtung zum Ausschrauben der Gewindespindel-Mutter-Einrichtung freilaufende Ratscheneinrichtung aufweist. Wird bei noch rotierendem Federteller die Schaltkupplung geschlossen, so rutscht die Ratscheneinrichtung durch und bewirkt durch ihr Ratschen ein schonendes und allmähliches Abbremsen der Rotation des Federtellers und der Speicherfeder. Die Ratscheneinrichtung kann dabei in einfachster Weise durch teilweises Abschrägen der mit einer federbelasteten Sperrklinke zusammenwirkenden Zahne einer im übrigen als übliche, formschlüssige Zahnkupplung ausgebildeten Schaltkupplung verwirklicht sein.

In Abänderung hierzu ist es auch möglich, die Schaltkupplung als schaltbare Reibungskupplung auszubilden; die Abbremswirkung für den rotierenden Federteller beim Schließen der Reibungskupplung ist hierdurch verstärkt erreichbar.

Nach einem weiteren Merkmal der Erfindung kann die Kupplung zwischen der Speicherfeder und dem drehbar gelagerten Teil des Gewindespindel-Triebes eine in Schließrichtung von der Speicherfeder belastbare Anschlagkupplung sein. Beim Spannen der Speicherfeder mittels des Spannkolbens nach einer Betätigung der Schaltkupplung löst sich diese Anschlagkupplung und ermöglicht ein leichtes Wiedereinschrauben des während des vorangehenden Notlösens ausgeschraubten, drehbar gelagerten Teiles des Gewindespindel-Triebes.

Hierbei kann nach der weiteren Erfindung der Federspeicherbremszylinder dadurch eine zweckmäßige Ausgestaltung erfahren, daß die Speicherfeder spannkolbenseitig an einem der Anschlagkupplung zugehörenden Kupplungsring anliegt, der in Wirkrichtung der Speicherfeder an das drehbar gelagerte Teil des Gewindespindel-Triebes ankuppelbar ist und über ein Axiallager drehbar gegen den Spannkolben abgestützt ist, und daß zwischen dem spannkolbenseitigen Ende des drehbar gelagerten Gewindespindel-Trieb-Teiles und dem Spannkolben eine bei geschlossener Anschlagkupplung ein Axialspiel aufweisende Axiallagerung angeordnet ist. Weiterhin kann hierbei der Spannkolben speicherfederseitig eine kreisscheibenartige Einbuchtung aufweisen, in welche der Kupplungsring eingreift und in welcher sich die Axiallager für den Kupplungsring und das drehbar gelagerte Gewindespindel-Trieb-Teil befinden. Schließlich ist es noch zweckmäßig, wenn das drehbar gelagerte Gewindespindel-Trieb-Teil spannkolbenseitig mit einer scheibenartigen Verstärkung endet, welche einerseits mit der Axiallagerung zum Spannkolben zusammenwirkt und welche andererseits eine Konusfläche aufweist, welche mit einer entsprechenden Konusfläche des Kupplungsringes die Anschlagkupplung bildet.

Zum Festlegen der Lösestellung des Federspeicherbremszylinders kann es nach einem weiteren Merkmal der Erfindung vorteilhaft sein, wenn das undrehbare Gewindespindel-Trieb-Teil in der Lösestellung mittels eines Anschlages axial am Zylinder-Gehäuseteil abgefangen ist. Weiterhin kann auch der Kupplungsring in Lösestellung mittels eines weiteren Anschlages am Gehäuseteil, gegebenenfalls über das undrehbare Gewindespindel-Trieb-Teil, abgefangen sein.

Eine vorteilhafte, gut gegen Verschmutzung schützbare Ausbildung kann nach weiteren Merkmalen der Erfindung der Federspeicherbremszylinder dadurch erhalten, daß das undrehbare Gewindespindel-Trieb-Teil rohrartig mit einem Muttergewinde und das drehbar gelagerte Teil als Gewindespindel ausgebildet ist, und daß weiterhin das rohrartige, undrehbare Teil an seinem dem Federspeicher-Spannkolben abgewandten Ende verschlossen ist. Schließlich kann nach einem Merkmal der Erfindung das rohrartige, undrehbare Gewindespindel-Trieb-Teil nahe seines spannkolbenseitigen Endes eine ringflanschartige Verstärkung aufweisen, deren Stirnfläche in der Lösestellung die Anschlagflächen am Gehäuseteil bzw. am Kupplungsring bilden. Im Lösezustand des Federspiecherzylinders erfährt hierdurch das die Kraft des Federspeicherbremszylinders abgebende, undrehbare Teil durch Einklemmen zwischen dem Kupplungsring und dem Gehäuse eine gute Halterung, die oftmals für weitere, mit dem Federspeicherbremszylinder zusammenwirkende Gerät von Vorteil ist, beispielsweise beim Anflanschen eines Betriebsbremszylinders an den Federspeicherbremszylinder eine vorteilhafte Führung des Kolbens des Betriebsbremszylinders ermöglicht.

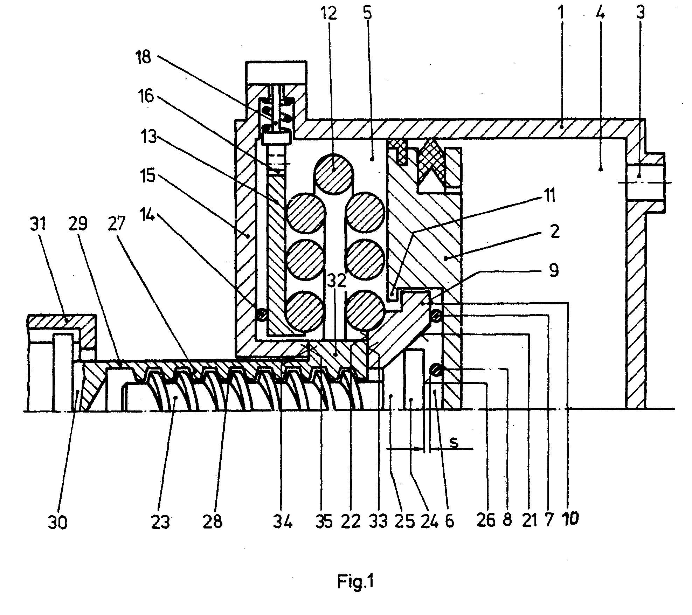

In den Zeichnungen Fig. 1 bis Fig. 6 ist ein Ausführungsbeispiel eines nach der Erfindung ausgestalteten Federspeicherbremszylinders in unterschiedlichen Schaltstellungen dargestellt. Die Fig. 7 zeigt eine Einzelheit des Federspeicherbremszylinders.

Der in Fig. 1 in seiner Lösestellung gezeigte Federspeicherbremszylinder weist ein Gehäuse 1 auf, in welchem ein Spannkolben 2 abgedichtet axialverschieblich geführt ist. Das Gehäuse 1 ist mit einem Rohranschluß 3 versehen, durch welchen ein vom Spannkolben 2 begrenzter Beaufschlagungsraum 4 mit einem Druckmittel füllbar ist. Auf der dem Beaufschlagungsraum 4 abgewandten Seite begrenzt der Spannkolben 2 eine Kammer 5, und weist zentrisch eine mit dieser in Verbindung stehende, kreisscheibenartige Einbuchtung 6 auf. In der Einbuchtung 6 liegen am Spannkolben 2 zwei Axiallager 7 und 8 unterschiedlichen Durchmessers an; am den größeren Durchmesser aufweisenden Axiallager 7 stützt sich mit einer ringförmigen Radialfläche 9 ein in der Einbuchtung 6 gehaltener Kupplungsring 10 ab. Eine die Einbuchtung 6 geringfügig übergreifender Vorsprung 11 des Spannkolbens 2 hält den Kupplungsring 10 in der Einbuchtung 6. In der Kammer 5 befindet sich eine doppelkegelig ausgebildete Speicherfeder 12, deren eines Ende an einer entsprechend geformten Fläche nahe des Außenumfanges des Kupplungsringes 10 und deren anderes Ende an einer entsprechenden Fläche eines Federtellers 13 anliegt.

Der ringförmig ausgestaltete Federteller 13 ist gegenüberliegend zur Anlage der Speicherfeder 12 mittels eines Axiallagers 14 drehbar gegen eine die Kammer 5 begrenzende Stirnwand 15 des Gehäuses 1 abgestützt. An seinem Außenumfang ist der Federteller 13 in der aus Fig. 7 ersichtlichen Weise verzahnt ausgebildet: Die sich im wesentlichen radial erstreckenden Sperrzähne 16 des Federtellers 13 sind in ihrem radialäußeren Bereich einseitig durch Schrägflächen 17 abgeschrägt. Die Sperrzähne 16 wirken mit einer Sperrklinke 18 zusammen, die zum Federteller 13 radialverschieblich im Gehäuse 1 gelagert und von einer Feder 19 in Einrückrichtung in die Sperrzähne 16 belastet ist. Außerhalb des Gehäuses 1 ist die Sperrklinke 18 mit einem Handgriff 20 für ihre willkürliche Betätigung versehen.

Der Kupplungsring 10 weist radial innerhalb der Radialfläche 9 auf der dem Spannkolben 2 zugewandten Seite eine Konusfläche 21 und dieser gegenüberliegend radial innhalb der Anlage der Speicherfeder 12 eine radiale Ringfläche als Anschlagfläche 22 auf. Die Öffnung des Kupplungsringes 10 ist mit Spiel von einer Gewindespindel 23 durchragt, welche spannkolbenseitig innerhalb der Einbuchtung 6 mit einer scheibenartigen Verstärkung 24 endet. Die Verstärkung 24 weist einerseits in ihrem Randbereich eine der Konusfläche 21 gegenüberstehende Konusfläche 25 auf; die beiden Konusflächen 21 und 25 bilden eine Anschlagkupplung 21, 25. Bei aneinanderanliegenden Konusflächen 21 und 25, also geschlossener Anschlagkupplung 21, 25, steht die Verstärkung 24 mit ihrer dem Spannkolben 2 zugewandten Begrenzungsfläche 26 dem Axiallager 8 mit einem geringen Axialspiel s gegenüber.

Die Gewindespindel 23 ist mit einer rohrartigen Mutter 27 mittels eines nichtselbsthemmenden Gewindes 28 verschraubt. Der Rohrkörper 29 der Mutter 27 ist axialverschieblich in einer Durchbrechung der Stirnwand 15 gelagert, an seinem ins Freie ragende Ende bei Bezugszeichen 30 verschlossen und undrehbar mit einem drehfest gehaltenen, im übrigen nicht dargestellten Gestängeteil 31 der vom Federspeicherbremszylinder zu betätigenden Bremse gehalten. Innerhalb des Gehäuses 1 endet der Rohrkörper 29 mit einer ringflanschartigen Verstärkung 32, deren radiale Stirnflächen 33 bzw. 34 der Ringfläche 22 bzw. einer an der Stirnwand 15 befindlichen, ringförmigen Anschlagfläche 35 gegenüberstehen.

Die Gewindespindel 23 stellt zusammen mit der Mutter 27 einen Gewindespindel-Trieb 23, 27 dar, wobei die Gewindespindel 23 das drehbar gelagerte und die Mutter 27 das drehfest gehaltene Teil ist.

Im Lösezustand des Federspeicherbremszylinders nehmen dessen Teile die aus Fig. 1 ersichtlichen Lagen ein: Der Beaufschlagungsraum 4 ist von Druckmittel beaufschlagt, der Spannkolben 2 hält über das Axiallager 7 und den Kupplungsring 10 die Speicherfeder 12 komprimiert, die aus der Sperrklinke 18 und den Sperrzähnen 16 des Federtellers 13 gebildete, schaltbare Schaltkupplung ist unter der Kraft der Feder 19 eingerastet, wodurch der Federteller 13 undrehbar gehalten ist, und die Verstärkung 32 ist durch Anlage ihrer Stirnflächen 33 und 34 an den Anschlagflächen 22 und 35 unter der die Kraft der Speicherfeder 12 übersteigenden Kraftkomponente des Spannkolbens 2 zwischen dem Kupplungsring 10 und dem Gehäuse 1 eingespannt. Durch diese Einspannung wird der Rohrkörper 29 in einer genauen Lage gehalten, derart, daß er beispielsweise als Führung für den Kolben eines nicht dargestellten Betriebsbremszylinders dienen kann. Die Verstärkung 24 befindet sich zwischen dem Axiallager 8 und der Konusfläche 21, sie kann beispielsweise, wie in Fig. 1 dargestellt, mit ihrer Konusfläche 25 kraftlos an der Konusfläche 21 anliegen.

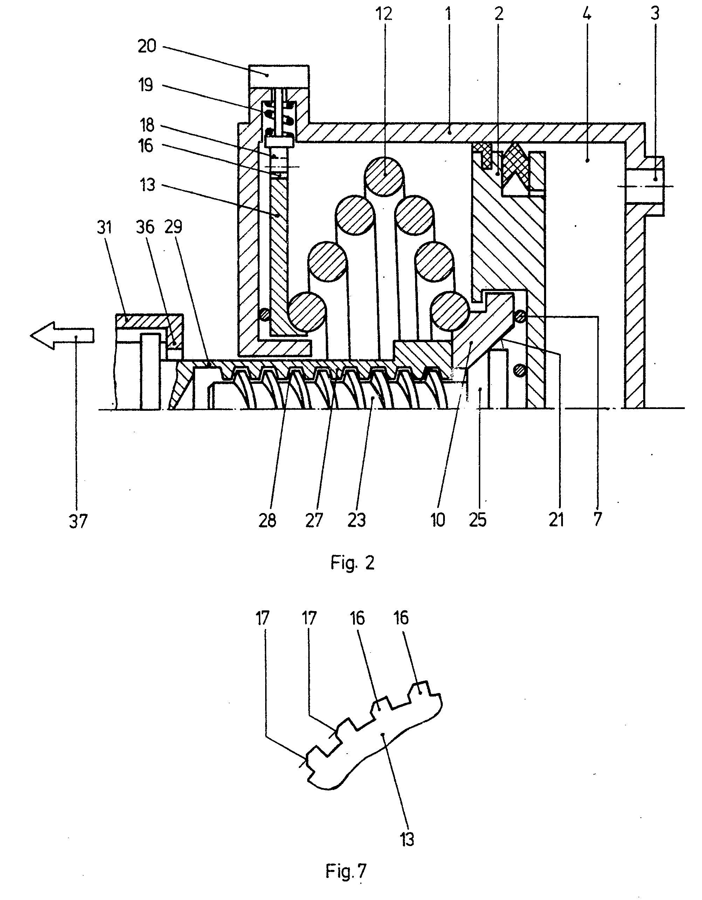

Zum Bremsen wird der Beaufschlagungsraum 4 über den Rohranschluß 3 mehr oder weniger, gegebenenfalls bis auf Atmosphärendruck in seiner Druckbeaufschlagung reduziert. Die Speicherfeder 12 drückt über den Kupplungsring 10 und das Axiallager 7 dabei den Spannkolben 2 nach rechts in die in Fig. 2 beispielsweise dargestellte Lage. Während dieser Bewegung gelangt die Konusfläche 21 zur Anlage an der Konusfläche 25, das heißt die Anschlagkupplung 21, 25 schließt sich, die Gewindespindel 23 wird hierdurch drehfest mit dem Kupplungsring 10 gekuppelt und bei dessen Verschiebung nach rechts mitgenommen. Über die Speicherfeder 12 ist der Kupplungsring 10 mit dem Federteller 13 drehfest verbunden und der Federteller 13 ist durch die geschlossene, von den Sperrzähnen 16 und der mit diesen in Eingriff stehenden Sperrklinke 18 gebildeten Schaltkupplung 16, 18 undrehbar gehalten. Die somit undrehbar mit dem Gehäuse 1 gekuppelte Gewindespindel 23 nimmt über das Gewinde 28 die Mutter 27 bzw. den Rohrkörper 29 infolge dessen undrehbarer Halterung am Gestängeteil 31 bei ihrer Längsverschiebung mit. Über eine unter dem Bezugszeichen 36 dargestellte Anschlagkupplung wird dabei das Gestängeteil 31 vom Rohrkörper 29 entgegen der auf es einwirkenden, in Richtung des Pfeiles 37 wirkenden Kraft mitgenommen und die nicht dargestellte Bremse somit zugespannt. Das durch die Belastung des Gewindes 28 mit der axialen Kraft der Speicherfeder 12 in der Gewindespindel 13 hervorgerufene Drehmoment wird über die geschlossene Anschlagkupplung 21, 25, die Speicherfeder 12, den Federteller 13 und die geschlossene Schaltkupplung 16, 18 auf das Gehäuse 1 übertragen.

Zum üblichen Lösen wird, ausgehend von der Stellung nach Fig. 2, der Beaufschlagungsraum 4 wieder mit Druckmittel beaufschlagt und der Spannkolben 2 infolgedessen nach links in seine nach Fig. 1 dargestellte Stellung gedrückt. Über das Axiallager 7 und den Kupplungsring 10 wird dabei die Speicherfeder 12 gespannt. Die Anschlagkupplung 21, 25 bleibt während des Lösevorganges unter der in Pfeilrichtung 37 wirkenden, vom Gestängeteil 31 ausgeübten Kraft geschlossen.

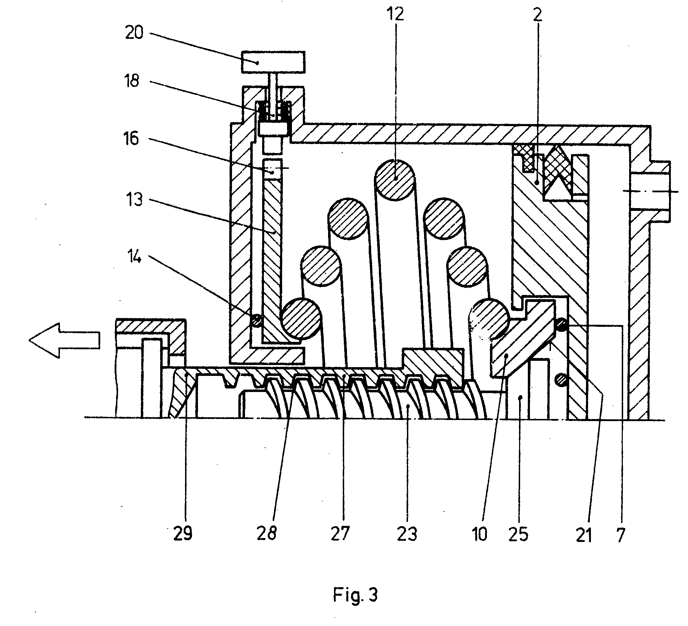

Soll, ausgehend von der Stellung nach Fig. 2, ohne Druckmittelbeaufschlagung des Beaufschlagunsraumes 4 ein Lösen der Bremsen bewirkt werden, so ist manuell am Handgriff 20 zu ziehen, wodurch die Sperrklinke 18 entgegen der Kraft der Feder 19 aus den Sperrzähnen 16 ausgehoben wird. Damit wird die Drehsperre für den Federteller 13 aufgehoben und unter der Axialkraft der Speicherfeder 12 wird die Gewindespindel 23 vermittels des nicht selbsthemmenden Gewindes 28 aus der Mutter 27 bzw. dem Rohrkörper 29 nach rechts herausgeschraubt, wie in Fig. 3 dargestellt ist. Das Herausschrauben der Gewindespindel 23 erfolgt unter deren Drehung; diese Drehung wird über die unter der Kraft der sich bei diesem Vorgang entspannenden Speicherfeder 12 geschlossenen Anschlagkupplung 21, 25 auf den Kupplungsring 10 und von diesem über die Speicherfeder 12 auf den Federteller 13 übertragen, welcher auf dem Axiallager 14 zu rotieren beginnt. Über das Axiallager 7 wird dabei der Spannkolben 2 nach rechts verschoben. Es ist also festzustellen, daß die Gewindespindel 23, der Kupplungsring 10 und die Speicherfeder 12 mit Ausnahme ihrer linken, am Federteller 13 anliegenden Endwindung sich unter Drehung nach rechts bewegen, der Spannkolben 2 eine drehungsfreie Verschiebung nach rechts erfährt und der Federteller 13 mit der an ihm anliegenden Windung der Speicherfeder 12 nur eine Drehung ohne Axialverschiebung ausführt. Der Kupplungsring 10, die Spannfeder 12 und der Federteller 13 weisen ein beachtliches Schwungmoment auf, so daß sie nur eine allmähliche Beschleunigung ihrer Drehbewegung erfahren und der Spannkolben 2 sich daher nicht schlagartig, sondern allmählich beschleunigend nach rechts bewegt.

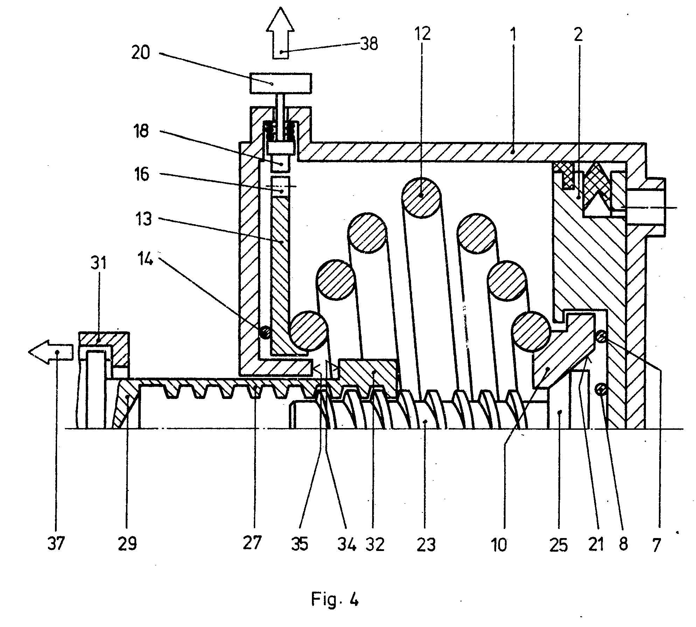

Zu Ende des in Fig. 3 in einer Zwischenstellung dargestellten Lösevorganges gelangt der Spannkolben 2 zur Anlage an der rechten, den Beaufschlagungsraum 4 begrenzenden Stirnwand des Gehäuses 1 zur Anlage, wie es in Fig. 4 dargestellt ist. Infolge der mäßigen Geschwindigkeit des Spannkolbens 2 erfolgt hierbei kein harter, schlagartiger Aufprall. Die Restspannung der rotierenden Speicherfeder 12 stützt sich nun einerseits über den Federteller 13 und das Axiallager 14 und andererseits über den Kupplungsring 10, das Axiallager 7 und den Spannkolben 2 gegen das Gehäuse 1 ab. Bei vorerst weiterhin durch Ziehen in Pfeilrichtung 38 am Handgriff 20 gelöst gehaltener Schaltkupplung 16, 18 rotieren nach Anlage des Spannkolbens 2 am Gehäuse 1 die Speicherfeder 12, der Federteller 13, der Kupplungsring 10 und die unter der in Pfeilrichtung 37 wirkenden Kraft des Gestängeteiles 31 noch mit dem Kupplungsring 10 gekuppelte Gewindespindel 23 vorerst weiter. Bei axial in ihrer Lage verharrender Gewindespindel 23 wird dabei die Mutter 27 nach links verschraubt und der Rohrkörper 29 mitsamt dem Gestängeteil 31 bewegen sich nach links, wodurch die Bremse gelöst wird.

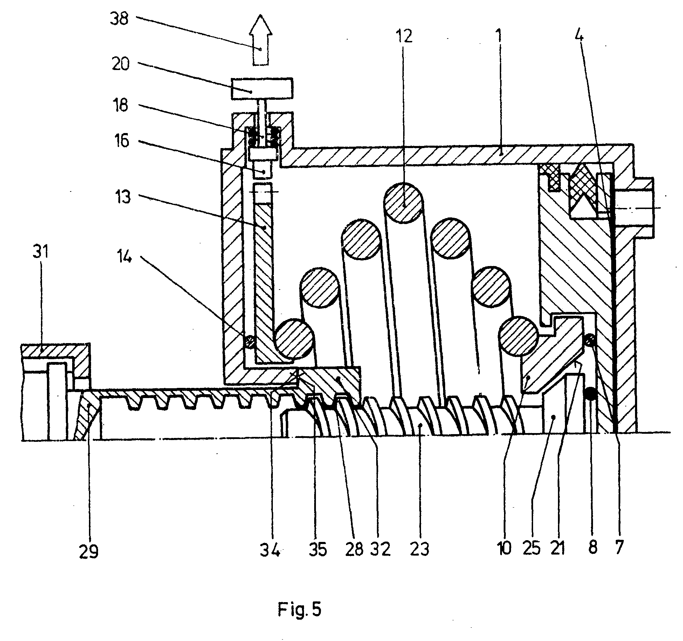

Sobald nach diesem in Fig. 4 dargestellten Vorgang die Bremse gelöst ist, die vom Gestängeteil 31 ausgeübte Kraft damit abgeklungen ist und der Rohrkörper 29 durch Auftreffen der Stirnfläche 34 seiner Verstärkung 32 auf die Anschlagfläche 35 des Gehäuses 1 seine volle Lösestellung erreicht hat, erfährt die Gewindespindel 23 unter ihrer noch anhaltenden Drehun eine Verschraubung nach rechts, wobei sich die Anschlagkupplung 21, 25 löst. Damit wird die Gewindespindel 23 von den den Hauptanteil des Schwungmomentes aufweisenden Teilen, der Speicherfeder 12, dem Kupplungsring 10 und dem Federteller 13 entkuppelt und bleibt unter der Reibung des Gewindes 28 alsbald, kurz vor oder bei Auftreffen auf das Axiallager 8 stehen. Die Speicherfeder 12, der Kupplungsring 10 und der Federteller 13 rotieren dabei bei weiterhin durch Betätigen des Handgriffes 20 in Pfeilrichtung 38 gelöster Schaltkupplung 16, 18 noch weiter. Dieser Zustand ist in Fig. 5 dargestellt.

Es ist also festzustellen, daß, ausgehend von der Bremsstellung nach Fig. 2, beim Notlösen durch Betätigen der Sperrkupplung 16, 18 der Hauptanteil der Arbeitsleistung der sich entspannenden Speicherfeder 12 in Rotationsenergie insbesondere der relative schwere Speicherfeder 12 und nicht, wie bisher üblich, im Aufprall- bzw. Schlagenergie umgesetzt wird. Nach Beendigen des Lösevorganges der Bremse, also Erreichen der Stellung nach Fig. 5, kann der Handgriff 20 wieder freigegeben werden. Die Feder 19 drückt dann die Sperrklinke 18 gegen die Sperrzähne 16 des noch rotierenden Federtellers 13, wo sie auf die Schrägflächen 17 der Sperrzähne auftrifft und von diesen über die Sperrzähne 16 hinweggeführt wird. Die hierbei auftretende Reibung bremst den Federteller 13 und die mit diesem rotierenden Teile, die Speicherfeder 12 und den Kupplungsring 10, bis zum Stillstand ab. Sodann vermag die Sperrklinke 18 zwischen die Sperrzähne 16 voll einzurasten und somit durch Schließen der Schaltkupplung 16, 18 den Federteller 13 wieder drehfest mit dem Gehäuse 1 zu kuppeln. Abweichend hierzu ist es auch möglich, die Schaltkupplung 16, 18 bis wenigstens nahezu zum durch die Reibung der Axiallager 7 und 14 bewirkten Stillstand der rotierenden Teile gelöst zu halten.

Damit ist der Notlösevorgang beendet.

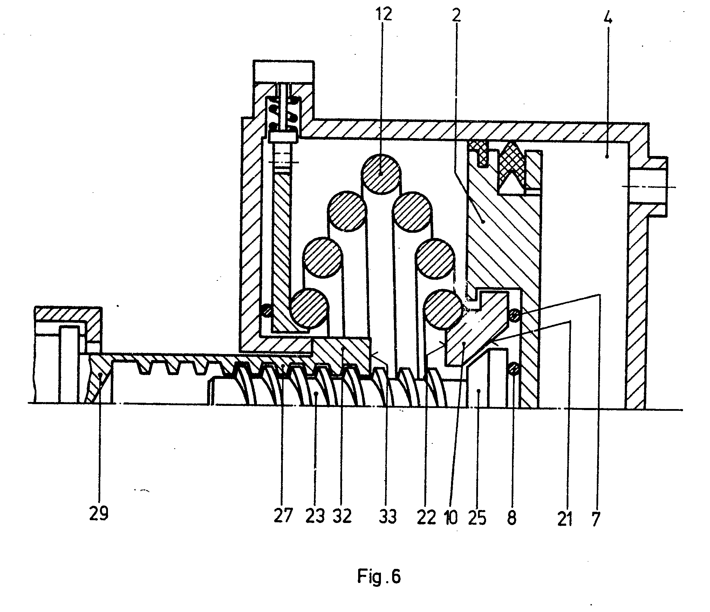

Wird, ausgehend von der Notlösestellung nach Fig. 5, jedoch inzwischen geschlossener Schaltkupplung 16, 18, der Beaufschlagungsraum 4 wieder mit Druckmittel gefüllt, so wird der Spannkolben 2 infolge der wiederkehrenden Druckbeaufschlagung nach links verschoben. Dieser Vorgang ist in Fig. 6 dargestellt. Die Speicherfeder 12 wird dabei über das Axiallager 7 und den Kupplungsring 10 gespannt und die Gewindespindel 23 wird bei gelöster Anschlagkupplung 21, 25 über das Axiallager 8 vom Spannkolben 2 nach links in die Mutter 27 bzw. den Rohrkörper 29 eingeschraubt. Beim Auftreffen der Anschlagfläche 22 des Kupplungsringes 10 auf die Stirnfläche 33 der Verstärkung 32 ist der betriebsbereite Lösezustand des Federspeicherbremszylinders selbsttätig wieder erreicht und alle Teile mit Ausnahme der sich in einer beliebigen Stellung innerhalb ihres Axialspieles s zum Spannkolben 2 einstellenden Gewindespindel 23 nehmen wieder die in Fig. 1 dargestellten Lagen ein.

Abweichend vom dargestellten Ausführungsbeispiel ist es möglich, unter Wegfall des Axiallagers 7 den Kupplungsring 10 starr mit dem Spannkolben 2 zu verbinden. Beim Notlösen rotiert dann der ganze Spannkolben 2 mit der Speicherfeder 12, wodurch die Masse der rotierenden Teile vergrößert und zugleich die der Rotation entgegenwirkende Reibung der rotierenden Teile gesteigert wird. Der Entspannungsvorgang der Speicherfeder 12 wird hierdurch verstärkt gehemmt und damit verlangsamt und durch die verstärkte Reibung ergibt sich ein rascheres Abbremsen der rotierenden Teile nach Beendigen des Entspannungsvorganges der Speicherfeder 12.

Weiterhin können die Gewindespindel 23 und die Mutter 27 vertauscht angeordnet werden, das heißt, die Gewindespindel als drehfest gehaltenes Teil mit dem Gestängeteil 31 gekuppelt und der die Mutter tragende Rohrkörper als drehbar gelagertes Teil des Gewindespindel-Triebes mit dem Spannkolben 2 bzw. dem Kupplungsring 10 kuppelbar ausgebildet werden.

Die Schaltkupplung 16, 18 kann an beliebiger Stelle derjenigen Teile angeordnet werden, die mit der Speicherfeder in drehfester Verbindung stehen: Beispielsweise kann im Bereich bzw. nahe bei der Anschlagkupplung 21, 25 eine willkürlich schaltbare Schaltkupplung vorgesehen werden. Die Betätigungsvorrichtung für eine derartige Schaltkupplung muß allerdings die Hubbewegungen des Spannkolbens 2 bzw. der Gewindespindel 23 berücksichtigen.

Vorteilhaft ist, wenn die Schaltkupplung bei ihrer Freigabe nicht sofort formschlüssig einrastet, sondern zuvor durch Reibung ein Abbremsen der rotierenden Teile ermöglicht. Es kann daher zweckmäßig sein, sie als kombinierte Reibungs- und Zahnkupplung auszubilden, wobei während eines Schließvorganges zuerst die Reibungs- und dann erst die Zahnkupplung in Eingriff kommt. Auch ist es möglich, die Schaltkupplung als reine Reibungskupplung auszubilden, wenn sichergestellt ist, daß im Bremszustand kein durch Erschütterungen bedingtes Durchrutschen der Reibungskupplung zu befürchten ist.

**Patentansprüche**

1. Federspeicherbremszylinder mit mechanischer Löseeinrichtung, insbesondere für Schienenfahrzeuge, mit einer mittel- oder unmittelbar einerseits axial unverschieblich im Zylindergehäuse (1) und andererseits an einem Speicherfeder-Spannkolben (2) abgestützten Speicherfeder (12), wobei die Löseeinrichtung einen zwischen dem Speicherfeder-Spannkolben (2) und einem auf die Bremse wirkenden Kraftabgabeglied angeordneten, von der Speicherfeder (12) belastbaren, nichtselbsthemmenden Gewindespindel-Trieb umfaßt, dessen eines Teil undrehbar, aber axial verschieblich, und dessen anderes Teil drehbar, aber im wesentlichen mit dem Speicherfeder-Spannkolben verschieblich gehalten und mittels einer willkürlich schaltbaren Schaltkupplung feststellbar ist, dadurch gekennzeichnet, daß

a) die Speicherfeder (12) auf dem Zylindergehäuse (1) drehbar abgestützt ist;

b) das spannkolbenseitige Ende der Speicherfeder (12) drehmomentschlüssig mit dem drehbar gelagerten Teil (23) des Gewindespindel-Triebes (23, 27) verbunden bzw. durch eine zumindest nach Lösen der Schaltkupplung (16, 18) während der Bewegungsphase des Spannkolbens (2) geschlossene Kupplung (21, 25) kuppelbar ist;

c) die Schaltkupplung (16, 18) zur Feststellung des drehbar gelagerten Teils (23) des Gewindespindel-Triebes (23, 27) an der Speicherfeder (12) oder an einem mit dieser drehfest verbundenen Teil angreift.

2. Federspeicherbremszylinder nach Anspruch 1, dadurch gekennzeichnet, daß die Schaltkupplung (16, 18) zwischen dem axial unverschieblichen Ende der Speicherfeder (12) und dem Zylindergehäuse (1) eingeordnet ist.

3. Federspeicherbremszylinder nach Anspruch 1, dadurch gekennzeichnet, daß das gehäuseseitige Speicherfederende auf einem Federteller (13) aufliegt, der am Gehäuseteil (1) drehbar axial abgestützt ist, und daß die Schaltkupplung (16, 18) zwischen dem Federteller (13) und dem Gehäuseteil (1) angeordnet ist.

4. Federspeicherbremszylinder nach einem der vorhergehenden Ansprüche, dadurch gekennzeichnet, daß die Schaltkupplung (16, 18) eine nur in einer Übergangsphase vom geöffneten zum geschlossenen Kupplungszustand wirksame, in Drehrichtung zum Ausschrauben der Gewindespindel-Mutter-Einrichtung (23, 17) freilaufende Ratscheneinrichtung (Schrägflächen 17) aufweist.

5. Federspeicherbremszylinder nach einem oder mehreren der Ansprüche 1 bis 3, dadurch gekennzeichnet, daß die Schaltkupplung als schaltbare Reibungskupplung ausgebildet ist.

6. Federspeicherbremszylinder nach Anspruch 1, dadurch gekennzeichnet, daß die Kupplung zwischen der Speicherfeder (12) und dem drehbar gelagerten Teil (23) des Gewindespindel-Triebes (23, 27) eine in Schließrichtung von der Speicherfeder (12) belastbare Anschlagkupplung (21, 25) ist.

7. Federspeicherbremszylinder nach Anspruch 6, dadurch gekennzeichnet, daß die Speicherfeder (12) spannkolbenseitig an einem der Anschlagkupplung (21, 25) zugehörigen Kupplungsring (10) anliegt, der in Wirkrichtung der Speicherfeder (12) an das drehbar gelagerte Teil (23) des Gewindespindel-Triebes (23, 27) ankuppelbar ist und über ein Axiallager (7) drehbar gegen die Spannkolben (2) abgestützt ist, und daß zwischen dem spannkolbenseitigen Ende des drehbar gelagerten Gewindespindel-Trieb-Teiles (23) und dem Spannkolben (2) eine bei geschlossener Anschlagkupplung (21, 25) ein Axialspiel (s) aufweisende Axiallagerung (8) angeordnet ist.

8. Federspeicherbremszylinder nach Anspruch 7, dadurch gekennzeichnet, daß der Spannkolben (2) speicherfederseitig eine kreisscheibenartige Einbuchtung (6) aufweist, in welche der Kupplungsring (10) eingreift und in welcher sich die Axiallager (7 und 8) für den Kupplungsring (10) und das drehbar gelagerte Teil (23) befinden.

9. Federspeicherbremszylinder nach Anspruch 7, dadurch gekennzeichnet, daß das drehbar gelagerte Gewindespindel-Trieb-Teil (23) spannkolbenseitig mit einer scheibenartigen Verstärkung (24) endet, welche einerseits mit der Axiallagerung (8) zum Spannkolben (2) zusammenwirkt und welche andererseits eine Konusfläche (25) aufweist, welche mit einer entsprechenden Konusfläche (21) des Kupplungsringes (10) die Anschlagkupplung (21, 25) bildet.

10. Federspeicherbremszylinder nach Anspruch 1, dadurch gekennzeichnet, daß das undrehbare Gewindespindel-Trieb-Tiel (27) in der Lösestellung mittels eines Anschlages (34, 35) axial am Zylinder-Gehäuseteil (1) abgefangen ist.

11. Federspeicherbremszylinder nach Anspruch 7, dadurch gekennzeichnet, daß der Kupplungsring (10) in Lösestellung mittels eines Anschlages (22, 23) am Gehäuseteil (1), gegebenenfalls über das undrehbare Gewindespindel-Trieb-Teil (27), abgefangen ist.

12. Federspeicherbremszylinder nach Anspruch 1, dadurch gekennzeichnet, daß das undrehbare, Gewindespindel-Trieb-Teil (27) rohrartig (29) mit einem Muttergewinde und das drehbar gelagerte Teil als Gewindespindel (23) ausgebildet ist.

13. Federspeicherbremszylinder nach Anspruch 12, dadurch gekennzeichnet, daß das rohrartige, undrehbare Teil (27, 29) des Gewindespindel-Triebes (23, 27) an seinem dem Federspeicher-Spannkolben (2) abgewandten Ende verschlossen ist.

14. Federspeicherbremszylinder nach Anspruch 10, 11 und 12, dadurch gekennzeichnet, daß das rohrartige, undrehbare Gewindespindel-Trieb-Teil (27, 29) nahe seines spannkolbenseitigen Endes eine ringflanschartige Verstärkung (32) aufweist, deren Stirnflächen (33, 34) in der Lösestellung die Anschlagflächen (35 bzw. 22) am Gehäuseteil (1) bzw. am Kupplungsring (10) bilden.

## Claims

1. A spring-loaded brake cylinder with mechanical release device, in particular for rail vehicles, with a spring (12) located directly or indirectly at one end of a cylindrical housing (1) so as to be incapable of axial movement and located at the other end at a spring-tensioning piston (2), and with the release device comprising a threaded spindle drive without self-locking action capable of receiving a load imposed by spring (12) and located between the tensioning piston (2) of the spring and a force-transmitting element acting on the brake, and such that one part of said threaded spindle drive cannot rotate but can be displaced axially and the other part can rotate but is primarily held together with the spring tensioning piston in such a manner as to be capable of sliding, and can be locked in a non-rotatable manner by means of a shifting clutch provided with any suitable means of shifting, and possessing the following characteristic features:

a) brake cylinder spring (12) supported at cylinder housing (1) but able to rotate;

b) tensioning-piston end of spring (12) connected to the part (23) of the threaded spindle drive (23, 27) capable of rotating in such a manner as to permit torque to be transmitted, or can be coupled to said drive part by a clutch (21, 25) which is engaged at least following release of the shifting clutch (16, 18) during the tensioning-piston (2) movement phase;

c) the shifting clutch (16, 18) engages with the spring (12) or with a part attached thereto in a manner not permitting any relative rotating movement in order to lock the rotatable part (23) of the threaded spindle drive (23, 27).

2. A spring-loaded brake cylinder as claimed in claim 1, with the shifting clutch (16, 18) located between the end of the spring (12) which cannot be displaced axially and the cylinder housing (1).

3. A spring-loaded brake cylinder as claimed in claim 1, with the housing end of the spring (12) resting on a spring plate (13) which is supported axially against the housing but capable of rotation, and with the shifting clutch (16, 18) located between the spring plate (13) and the housing part (1).

4. A spring-loaded brake cylinder as claimed in one of the above claims, with the shifting clutch (16, 18) provided with a freewheel ratchet device (chamfered faces 17) taking effect only in a transitional phase from withdrawn to engaged clutch condition and in the direction of rotation causing the threaded spindle and nut device (23, 27) to be screwed out.

5. A spring-loaded brake cylinder as claimed in one or more of the above claims 1 to 3, with the switching clutch taking the form of a friction clutch.

6. A spring-loaded brake cylinder as claimed in claim 1, with the clutch between the spring (12) and the rotatable part (23) of threaded spindle drive (23, 27) consisting of a stop clutch (21, 25) to which load can be applied by the brake cylinder spring (12) in the direction of clutch engagement.

7. A spring-loaded brake cylinder as claimed in claim 6, with the brake cylinder spring (12) in contact at the tensioning-piston side with a coupling ring (10) associated with the stop clutch (21, 25), said ring to be capable of coupling in the direction in which the spring exerts its force to the rotatable part (23) of the threaded spindle drive (23, 27) and of rotating on a thrust bearing (7) which supports it against the tensioning piston (2), and with a thrust bearing (8) possessing axial play s when the stop clutch (21, 25) is engaged located between the tensioning-piston end of the rotatable threaded spindle drive part (23) and the tensioning piston (2).

8. A spring-loaded brake cylinder as claimed in claim 7, with the tensioning piston (2) having a circular disc-pattern recess (6) at the brake cylinder spring end in which the coupling ring (10) locates and which houses the thrust bearings (7) and (8) for the coupling ring (10) and the rotatable part (23) of the threaded spindle drive (23, 27).

9. A spring-loaded brake cylinder as claimed in claim 7, with the rotatable threaded spindle drive part (23) terminating at the tensioning-piston end with a disc-pattern reinforcement (24) which interacts on one side with the thrust bearing (8) at the tensioning piston (2) and has on the other side a conical face (25) which together with a corresponding conical face (21) on the coupling ring (10) forms the stop clutch (21, 25).

10. A spring-loaded brake cylinder as claimed in claim 1, with the non-rotating threaded spindle drive part (27) held in the released position by a stop (34, 35) axially located on the cylinder housing part (1).

11. A spring-loaded brake cylinder as claimed in claim 7, with the coupling ring (10) in the released position held by a stop (22, 23) on housing part (1), either directly or by way of the non-rotating threaded spindle drive part (27).

12. A spring-loaded brake cylinder as claimed in claim 1, with the non-rotatable threaded spindle drive part (27) taking the form of a tubular element (29) with a nut thread and the rotatable part taking the form of a threaded spindle (23).

13. A spring-loaded brake cylinder as claimed in claim 12, with the tubular, non-rotatable part (27, 29) of the threaded spindle drive (23, 27) sealed at the end opposite to the brake cylinder spring tensioning piston (2).

14. A spring-loaded brake cylinder as claimed in claims 10, 11 and 12, with the tubular, non-rotating threaded spindle drive part (27, 29) provided with an annular flange-pattern reinforcement (32) near to its tensioner-piston end, the end faces (33, 34) of which form stop faces in the released position against the housing part (1) and the coupling ring (10).

## Revendications

1. Cylindre de frein à ressort accumulateur avec dispositif de desserrage mécanique, notamment pour véhicules sur rail, comprenant un ressort accumulateur (12) qui s'appuie d'une part directement ou indirectement, sans possibilité de se déplacer axialement, sur une paroi du corps de cylindre (1) et d'autre part sur un piston (2), le dispositif de desserrage comportant un système vis/écrou à filetage réversible, disposé entre le piston (2) du ressort accumulateur et un organe de transmission de force pouvant être chargé par le ressort accumulateur (12) et agissant sur le frein, une partie dudit système étant solidaire en rotation, mais déplaçable en sens axial, l'autre partie pouvant tourner, mais essentiellement déplaçable en sens axial, avec le piston, et immobilisable par un accouplement enclenchable à volonté, caractérisé en ce que

a) le ressort accumulateur (12) s'appuie sur le corps de cylindre (1) au moyen d'un élément tournant;

b) l'extrémité du ressort accumulateur (12), du côté du piston est solidaire en rotation de la partie tournante (23) du système vis/écrou (23, 27) ou bien accouplable à ladite extrémité par l'accouplement (21/25) en prise, au moins après le déclenchement de l'accouplement (16/18), pendant la phase de mouvement du piston (2);

c) l'accouplement (16/18) qui a pour but d'immobiliser la partie tournante (23) du système vis/écrou (23, 17) coopère avec le ressort accumulateur (12) ou bien avec une pièce solidaire en rotation du ressort (12).

2. Cylindre de frein à ressort accumulateur selon la revendication 1, caractérisé en ce que l'accouplement (16, 18) est disposé entre l'extrémité non déplaçable axialement du ressort accumulateur (12) et le corps de cylindre (1).

3. Cylindre de frein à ressort accumulateur selon la revendication 1, caractérisé en ce que l'extrémité du ressort accumulateur côté corps (1) s'appuie sur la cuvette de resort (13) qui s'appuie, à son tour, sur le corps (1), par l'intermédiaire d'un organe permettant sa rotation en sens axial, et en ce que l'accouplement (16, 18) est disposé entre la cuvette de ressort (13) et le corps (1).

4. Cylindre de frein à ressort accumulateur selon l'une des revendications précédentes, caractérisé en ce que l'accouplement (16, 18) est muni d'un système de roue libre à cliquet (faces obliques 17), fonctionnant en sens de rotation pour permettre le dévissage du système vis/écrou (23/27).

5. Cylindre de frein à ressort accumulateur selon l'une ou plusieurs des revendications 1 à 3, caractérisé en ce que l'accouplement est conçu comme accouplement à friction accouplable à volonté.

6. Cylindre de frein à ressort accumulateur selon la revendication 1, caractérisé en ce que l'accouplement disposé entre le ressort accumulateur (12) et la partie tournante (23) du système vis/écrou (23, 27) consiste dans un accouplement-butée (21, 15) pouvant être chargé par le ressort accumulateur (12) en direction de fermeture.

7. Cylindre de frein à ressort accumulateur selon la revendication 6, caractérisé en ce que le ressort accumulateur (12) s'applique du côté du piston contre une bague d'accouplement (10), faisant partie de l'accouplement-butée (21, 25), bague laquelle, en direction de la force exercée par le ressort accumulateur (12), peut être accouplée à la partie tournante (23) du système vis/écrou (23, 27) et qui s'appuie, par l'intermédiaire d'une butée axiale (7), contre le piston (2), et en ce que, entre l'extrémité du côté piston de la partie tournante (23) du système vis/écrou et le piston (2), est disposé une butée axiale (8) présentant un jeu axial (s) tant que l'accouplement-butée (21, 15) est en prise.

8. Cylindre de frein à ressort accumulateur selon la revendication 7, caractérisé en ce que le piston (2) comporte, du côté du ressort accumulateur, un évidement circulaire (6) où s'engage la bague d'accouplement (10) et où sont disposées les butées axiales (7 et 8) sur lesquelles s'appuient respectivement la bague d'accouplement (10) et la partie tournante (23).

9. Cylindre de frein à ressort accumulateur selon la revendication 7, caractérisé en ce que la partie tournanto (23) du système vis/écrou se termine, du côté du piston, par un renfort annulaire (24), qui, d'une part, coopère avec la butée axiale (8) du piston (2) et d'autre part présente une surface conique (25) laquelle, en conjugaison avec la surface conique (21) correspondante de la bague d'accouplement (10), constitue l'accouplement-butée (21, 25).

10. Cylindre de frein à ressort accumulateur selon la revendication 1, caractérisé en ce que la partie non tournante (27) du système vis/écrou s'appuie axialement, en position de desserrage, sur une butée (34, 35) faisant partie du corps de cylindre.

11. Cylindre de frein à ressort accumulateur selon la revendication 7, caractérisé en ce que la bague d'accouplement (10), en position de desserrage, s'appuie, le cas échéant, sur une butée (22, 23) du corps (1), par l'intermédiaire de la partie non tournante (27) du système vis/écrou.

12. Cylindre de frein à ressort accumulateur selon la revendication 1, caractérisé en ce que la partie non tournante (27) du système vis/écrou a la forme d'un tube à taraudage (29) et que la partie tournante (23) constitue la vis (23).

13. Cylindre de frein à ressort accumulateur selon la revendication 12, caractérisé en ce que la pièce tubulaire non tournante (27, 29) du système vis/écrou (23, 27) est fermé à son extrémité opposée au piston (2).

14. Cylindre de frein à ressort accumulateur selon les revendications 10, 11 et 12, caractérisé en ce que la partie tubulaire non tournante (27, 29) du système vis/écrou est munie, à proximité de son extrémité du côté piston, d'un renfort (32) en forme de bride annulaire dont les surfaces frontales (33, 34) constituent, en position de desserrage, les surfaces de butée (35 et 22) sur la partie qui fait corps (1) et la bague d'accouplement (10).

Fig.1

Fig. 2

Fig. 7

Fig. 3

0 001 805

Fig. 4

Fig. 5

Fig.6